# EUROPEAN PATENT SPECIFICATION

(11) **EP 2 303 605 B1**
(45) Date of publication and mention of the grant of the patent: **20.02.2013**
(21) Application number: 08785125.9
(22) Date of filing: 26.07.2008
(51) Int. Cl.: B60B 27/00, F16C 19/18, F16C 35/063

(54) **METHOD FOR PRODUCING A WHEEL BEARING UNIT AND WHEEL BEARING UNIT**
RADLAGEREINHEIT UND VERFAHREN ZU DEREN HERSTELLUNG
PROCÉDÉ DE PRODUCTION D UN ENSEMBLE ROULEMENT DE ROUE ET ROULEMENT DE ROUE

(43) Date of publication of application: 06.04.2011
(73) Proprietor: AB SKF, 415 50 Göteborg (SE)
(72) Inventor: ZWARTS, Jacobus, NL-3438 VA Nieuwegein (NL); VISSER, Cornelius, Petrus, Antonius, NL-5275 BT Den Dungen (NL); VERHULST, Laurens, NL-3524 AN Utrecht (NL); KAPAAN, Hendrikus, Jan, NL-3435 DM Nieuwegein (NL)
(74) Representative: Gosdin, Michael
(86) International application number: PCT/EP2008/006174
(87) International publication number: WO 2010/012284

(56) References cited:
- DE-A1- 3 902 142
- DE-A1- 4 023 016
- DE-C1- 4 230 639
- FR-A- 2 138 861
- GB-A- 2 007 801
- US-A- 5 494 129

## Description

### Technical Field

The invention relates to a method for producing a wheel bearing unit for a vehicle wheel, wherein the wheel bearing unit comprises a hub element having a first part with a radially extending flange section for fixing the vehicle wheel and/or a brake disk at a face side of the flange section and having a second part with an axially extending sleeve section for supporting at least one inner ring or at least one outer ring of a bearing arrangement for supporting the hub element, wherein the two parts of the hub element are formed so that each of the parts has an axial stop for one of the inner or outer rings, wherein during assembly of the wheel bearing unit both parts of the hub element are moved axially toward each other into a final relative position so that at least one bearing ring is axially fixed relatively to the hub element and wherein both parts of the hub element are permanently connected by a welding process in the final relative position. Furthermore, the invention relates to a wheel bearing unit.

### Background

A wheel bearing unit of this kind is disclosed in DE 40 23 016 A1. A similar solution is shown for example in WO 2008/000283 A1. Here a cylindrical sleeve element forms a part of the wheel bearing unit and is supported by a two-row angular contact ball bearing. Radially extending flange elements are formed at the cylindrical sleeve element to support a brake disk which can thus be fixed at the hub element. A vehicle wheel is then mounted by attaching it at one of the face sides of the brake disk.

This previously known design of a wheel bearing unit is quite complex and is expensive to produce. The method for producing the wheel bearing unit demands a lot of assembly work to establish a desired amount of preload in the bearing unit.

### Summary of the invention

According to the invention, a method is suggested for the production of a wheel bearing unit of the kind mentioned above. Furthermore, a design for a wheel bearing unit is proposed, which is suitable to support a brake disk and/or a vehicle wheel. The wheel bearing unit comprises a hub element, which is arranged to be supported by a bearing arrangement. Furthermore, the hub element has a radially extending flange section for fixing the vehicle wheel and/or the brake disk at a face side of the flange section.

It is an object of the invention to create a method for the production of a wheel bearing unit which is both effective and thus cost efficient and also reliable in establishing a precise preload in the bearing unit. A further object is to propose a design of such a wheel bearing unit, which consists of parts that can easily be manufactured and can thus be produced in an inexpensive manner. In addition, the proposed wheel bearing unit should be easy and quick to assemble, to further enhance the cost savings. Finally, the wheel bearing unit should have a compact and stiff structure, so that the forces from the wheel can be taken up without excessive deformation of the wheel bearing unit.

A solution according to the invention for a method of producing a wheel bearing unit is characterized in that the welding process is a laser welding process, wherein the laser beam is directed in axial direction from an outboard (i. e. from the side of the wheel bearing unit to which the wheel abuts) or inboard (i. e. from the side of the wheel bearing unit to which the drive shaft abuts) side of the wheel bearing unit to a face side of the hub element or wherein the laser beam is directed in radial direction to the radial inner surface of the hub element.

The welding process is preferably the final step of the assembly of the wheel bearing unit. The two parts of the hub element are preferably pressed towards each other in axial direction during the welding process, so that a desired amount of preload is established in the bearing arrangement.

The wheel bearing unit according to the invention comprises a hub element having a first part with a radially extending flange section for fixing the vehicle wheel and/or a brake disk at a face side of the flange section and having a second part with an axially extending sleeve section for supporting at least one inner ring or at least one outer ring of a bearing arrangement for supporting the hub element, wherein each of the two parts of the hub element has an axial stop for one of the inner or outer rings, wherein at least one bearing ring is axially fixed relatively to the hub element between the two axial stops, wherein both parts of the hub element are permanently connected by a welding seam and wherein a defined preload is established in the bearing arrangement by the relative position of the two parts of the hub element. This unit is characterized according to the invention in that the welding seam is arranged at a face side of the hub element or at a radial inner surface of the hub element.

Preferably, the two parts of the hub element overlap by a defined amount in axial direction. The hub element or at least one part of the hub element can consist of sheet metal, wherein the sheet metal is preferably a low carbon ferrous metal, a non-ferrous metal (e. g. aluminium), or a combination of a ferrous and a non-ferrous metal. Preferably a sheet metal with low carbon content is used which has good cold forming properties as well as good welding properties.

Also, parts of the hub element can be made of carburized material. The hub element or the parts of the hub element are preferably made of sheet metal with a thickness of between 2 and 8 mm.

The face side of the flange section can have axially prominent ribs for contacting the vehicle wheel rim and/or the brake disk. This design ensures a high stiffness of the hub element. The number of ribs is preferably at least equal to the number of connection points used to fix the wheel rim and/or the brake disk to the flange section.

The flange section can have at least one spigot element extending in axial direction to the outboard side for centering of the vehicle wheel rim and/or the brake disk.

The hub element or at least a part of the hub element can be equipped with a form-fit connection for transferring a drive torque from a shaft to the wheel. Thus, when the proposed wheel bearing arrangement is adapted for driven applications, an embodiment of the invention suggests that the hub element is equipped with such a form-fit connection. One possibility is that the form-fit connection consists of splines arranged at a radial inner surface of the cylindrical formed sleeve section (longitudinal splines) or an axial spline at an inboard face side of the cylindrical formed sleeve section (face spline). Also other mechanical drive means can be employed, e.g. a polygonal formed drive section can be used for transferring the drive torque.

The at least one inner ring of the bearing arrangement can preferably rotate relatively to the at least one outer ring, wherein the at least one outer ring is arranged stationary. The outer ring can be fitted directly in the suspension steering knuckle or a flange can be used, e.g. an aluminium housing for bolting it to the steering knuckle. A bearing arrangement adapted for outer ring rotation is also possible.

The bearing arrangement is preferably a double row angular contact bearing. Both rows of rolling elements can be balls, flattened balls or rollers, or a combination of rolling elements can be used, e.g. a first row of balls and a second row of tapered rollers. Furthermore, the pitch diameter of the two rows can be equal or different in magnitude.

For the fixation of the wheel rim and/or brake disk to the flange section, the connection points can be mounting holes through which stud bolts are pressed. If ordinary bolts are applied, the connection points can be threaded or non-threaded holes or holes provided with threaded inserts.

By this design, the rotating bearing ring of the bearing arrangement can easily be axially fixed relatively to the hub element, when the first and the second part of the hub element are connected. Also, the bearing unit is supplied with a desired amount of preload in an easy manner.

The parts can be manufactured according to known technologies. For example, the part or parts for the hub element can be stamped out from a disk-shaped basis element.

In some embodiments, the hub element or its parts are provided with a coating to protect the element or the parts against corrosion during service conditions. The coating may consist of a sacrificial metal, e.g. a zinc coating, to provide protection against corrosion.

### Brief description of the drawing

The drawings show embodiments of the wheel bearing unit according to the invention.
- Fig. 1: shows a cut-away perspective view of a wheel bearing unit without brake disk and without wheel, which generally forms a pre-assembled hub element,
- Fig. 2: shows a cut-away perspective view of a wheel bearing unit without brake disk and without wheel, according to a preferred embodiment of the invention,
- Fig. 3: shows a perspective view of a similar wheel bearing unit,
- Fig. 4: shows a perspective view of an alternative design of the wheel bearing unit according to Fig. 2,
- Fig. 5: shows a sectional view of a part of the wheel bearing unit with a further alternative design and
- Fig. 6: shows a sectional view of a part of the wheel bearing unit with another alternative design.

### Detailed description of the invention

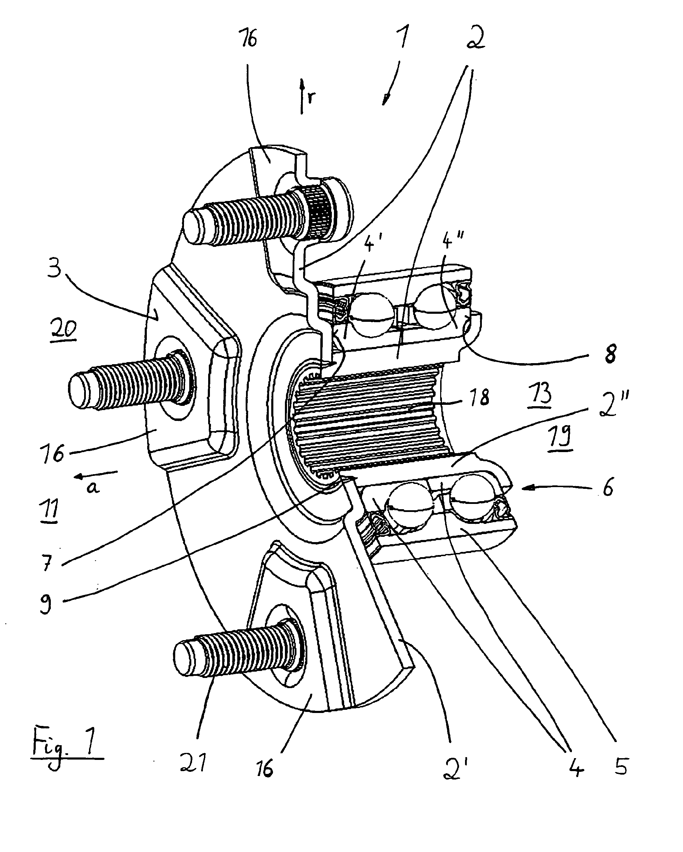

Fig. 1 shows a wheel bearing unit 1 which is used to support a vehicle wheel (not shown) relatively to a drive shaft (also not shown). The vehicle wheel would be in the space marked with the reference numeral 20. The drive shaft would be in the space marked with the reference numeral 19.

The wheel bearing unit 1 consists substantially of a hub element 2 and a bearing arrangement 6 which supports the hub element 2, i.e. the hub element 2, can rotate but it is supported without any possibility of movement in axial (a) and radial (r) direction. In the depicted embodiment the bearing arrangement 6 is a double-row annular contact ball bearing with a single outer ring 5 with two raceways and two inner rings 4' and 4", where the raceways are equal in diameter. Here, a driven application is shown where the inner rings 4', 4" of the bearing arrangement 6 are rotatable and the outer ring 5 is stationary.

The hub element 2 consists of two parts, namely a first part 2' and a second part 2". The first part 2' is substantially a flange section which extends in radial direction r. At one face side 3 of the flange section 2' the brake disk and the wheel rim of the wheel are mounted in a known manner. The second part 2" is substantially a cylindrical part, i.e. a sleeve section, extending in axial direction a.

To create a stiff design which can be easily assembled the following provision is made:
The hub element 2 and more specifically the first part 2' of the hub element 2 forms an axial stop 7 for one of the inner rings, namely for the outboard inner ring 4'. The first part 2' of the hub element 2 is connected to the second part 2", by which the two inner bearing rings 4', 4" are axially fixed. The connection between the two parts 2' and 2" of the hub element 2 is made by a welding seam 9.

The inner rings 4', 4" are thus prevented from an axial movement in an outboard direction. To ensure that also an axial movement in an inboard direction is prevented, the cylindrical formed sleeve section 2" has a radially widened section at its inboard end forming an axial stop 8 for the inboard inner ring 4".

Thus, when the flange part 2' is connected with the cylindrical formed sleeve section 2" by welding as shown fig. 1, not only a stiff hub element comes into being, also the axial position of the inner rings 4', 4" is fixed relatively to the hub element 2. By welding the two parts 2', 2" as the final process step in the production of the pre-assembled wheel bearing unit 1 a desired amount of preload is established in the bearing arrangement.

To increase the stiffness of hub element 2 and obtain a plane surface on which the brake disk and the wheel rim can rest, the flange section 2' of the hub element 2 has a plurality of axially prominent ribs 16 to which the brake disk and/or the wheel rim are bolted.

The brake disk and/or the wheel rim can be fixed to the hub element 2 by means of stud bolts 21, which are pressed into the flange section 2' and fix the brake disk and/or the wheel rim firmly to the flange section 2'.

To transfer a drive torque between the drive shaft 19 and the wheel 20, the cylindrical formed sleeve section 2" in the embodiment shown in fig. 1 has a spline 18 at its radial inner surface, which is a form-fit connection that cooperates with a respective spline (not shown) at the drive shaft 19.

A benefit of the proposed invention is that the method of producing a wheel bearing unit 1 becomes easy and inexpensive by the fact that the connection of the two parts 2' and 2" of the hub element 2 by welding is the final step of the production of the preassembled unit 1 in which a defined amount of preload in the bearing arrangement 6 is established.

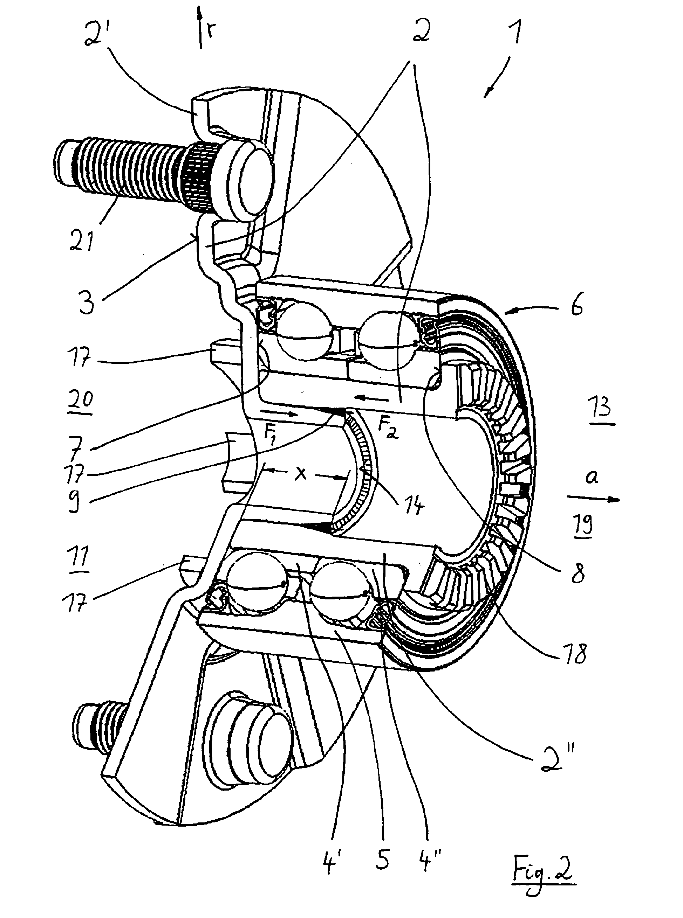

With regard to this, reference is made to the Figures 2 till 6.

In Fig. 2 it can be seen that the two parts 2' and 2" of the hub element 2 are machined in such a way that a telescopic section exists, in which the parts 2', 2" overlap in axial direction a by an amount x (see Fig. 2). When the components shown in Fig. 2 are pre-assembled the two parts 2' and 2" are pressed towards each another by the forces F₁ and F₂ (which are equal) so that a certain preload is established in the bearing arrangement 6. Both parts 2', 2" are maintained in this position while the welding seam 9 is produced, by which the relative position of the parts 2', 2" is fixed and thus the preload in the bearing arrangement 6 is established.

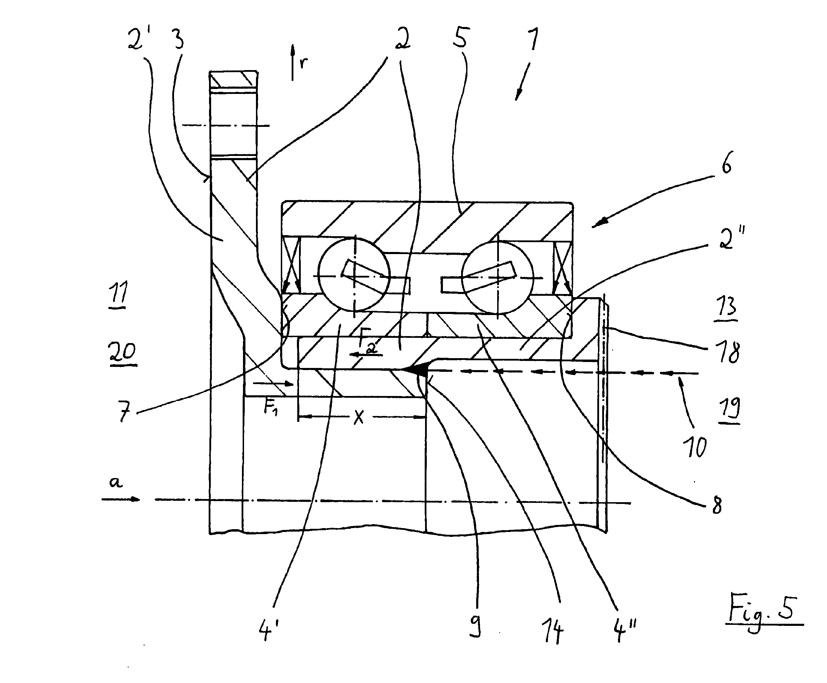

The embodiment according to Fig. 2 corresponds substantially to the cross section shown in fig. 5. Here, it can be seen that the welding seam 9 is created by a laser beam 10 which is directed in axial direction a and comes from an inboard side 13 of the unit 1. The laser beam 10 is directed to a face side 14 which is formed at the end of the overlapping section of the two parts 2' and 2". The inboard side 13 of the unit 1 is that side which abuts to the drive shaft 19.

The form-fit connection 18 for the transfer of a torque from the shaft 19 to the wheel 20 is here a spline connection which is arranged in the inboard face side of the second part 2" of the hub element 2 (so called face spline). The depicted spline 18 corresponds to a respective counter-spline in the drive shaft 19 (not shown).

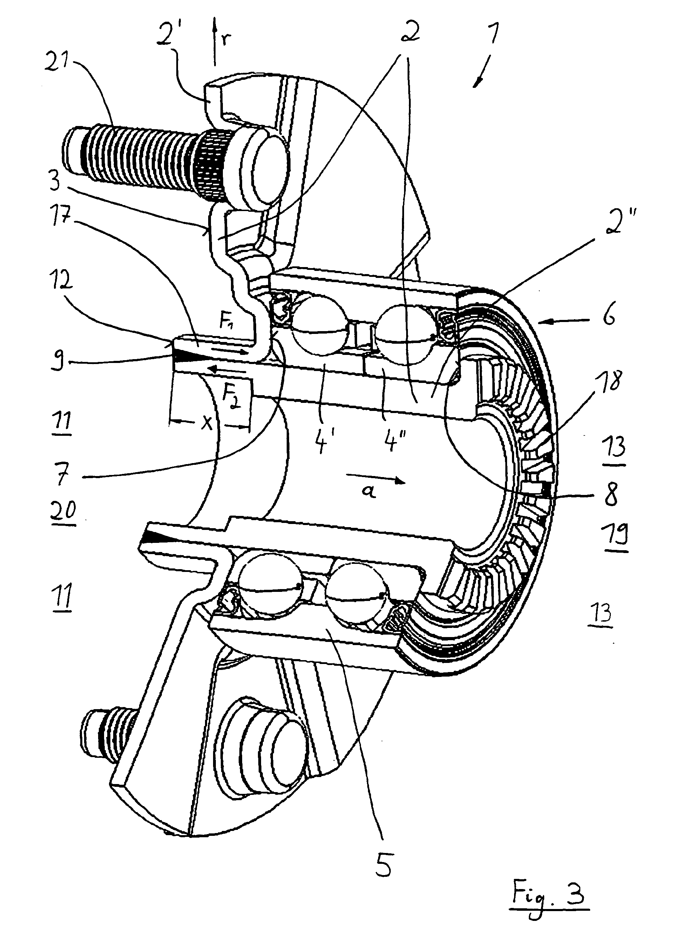

In Fig. 3 an alternative embodiment is shown in which the welding seam 9 is created in a face side 12 of the two overlapping parts 2' and 2". In this case the laser beam (not shown) is directed from the outboard side 11 to the first and second part 2', 2" of the hub element. The outboard side is the side of the unit 1 which abuts to the wheel 20.

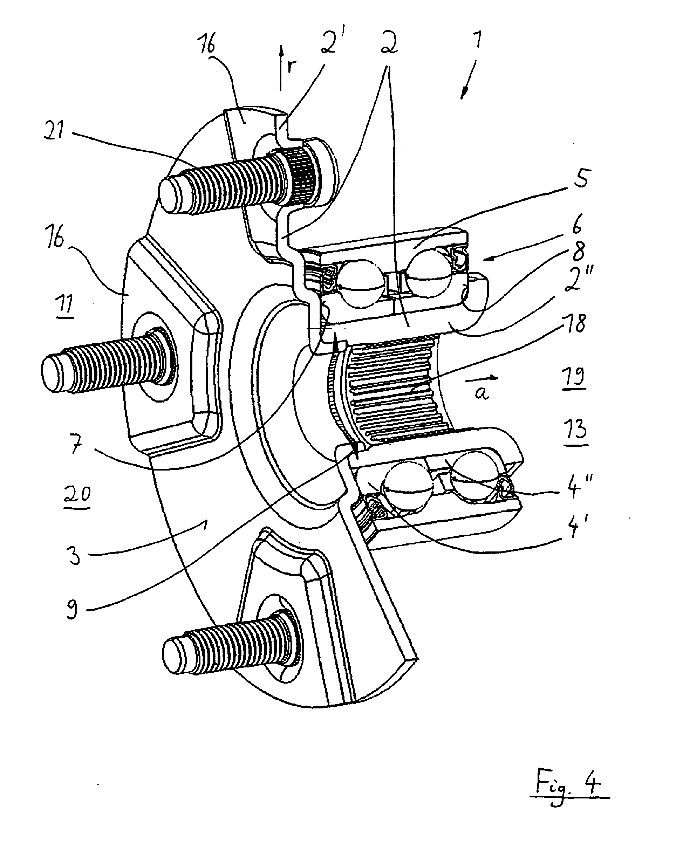

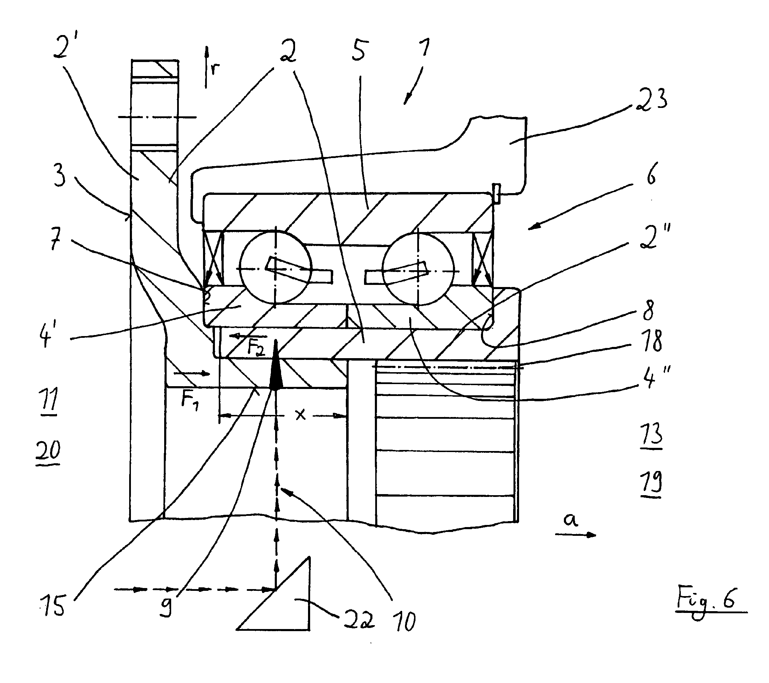

A further alternative embodiment is shown in Fig. 4. Fig. 6 is substantially the corresponding cross section of the embodiment according Fig. 4. Here, the welding seam 9 is arranged at a radial inner surface of the first part 2' in an overlapping area of the two parts 2' and 2" with the extension x. The laser beam 10 (see Fig. 6) is guided by a beam splitter 22 coming from the axial direction a and being deflected into radial direction r.

As also can be seen in Fig. 6, the whole pre-assembled wheel bearing unit 1 with the established pre-load in the bearing arrangement 6 can be finally mounted into a housing 23.

In a beneficial design of the wheel bearing unit 1 according to the invention, the first part 2' of the hub element comprises an axially extending spigot element 17 (see Figures 2 and 3), which allows an easy and precise centering of the wheel rim and/or brake disk on the hub element 2. The spigot element 17 can run continuously around the circumference (see Fig. 3) or can be interrupted in circumferential direction (see Fig. 2).

The bearing arrangement 6 can be sealed in a known manner to obtain a wheel bearing unit with a long service life and minimal maintenance requirements. The bearing arrangement can also be provided with one or more sensors, to detect operating parameters such as speed, load and/or vibration.

### Reference Numerals:

- 1: Wheel bearing unit
- 2: Hub element
- 2': First part of the hub element (flange section)
- 2": Second part of the hub element (cylindrical formed sleeve section)
- 3: Face side
- 4': Bearing inner ring
- 4": Bearing inner ring
- 5: Bearing outer ring
- 6: Bearing arrangement
- 7: Axial stop
- 8: Axial stop
- 9: Welding seam (energy welded section)
- 10: Laser beam
- 11: Outboard side
- 12: Face side
- 13: Inboard side
- 14: Face side
- 15: Radial inner surface
- 16: Rib
- 17: Spigot element
- 18: Form-fit drive connection (face or longitudinal spline)
- 19: Shaft
- 20: Wheel
- 21: Stud bolt
- 22: Beam splitter
- 23: Housing

- a: Axial direction
- r: Radial direction
- F₁: Force
- F₂: Force
- x: Overlapping extension

## Claims

1. Method for producing a wheel bearing unit (1) for a vehicle wheel, wherein the wheel bearing unit (1) comprises a hub element (2) having a first part (2') with a radially (r) extending flange section for fixing the vehicle wheel and/or a brake disk at a face side (3) of the flange section (2') and having a second part (2") with an axially (a) extending sleeve section for supporting at least one inner ring (4', 4") or at least one outer ring (5) of a bearing arrangement (6) for supporting the hub element (2),
wherein the two parts (2', 2") of the hub element (2) are formed so that each of the parts (2', 2") has an axial stop (7, 8) for one of the inner or outer rings (4', 4", 5),
wherein during assembly of the wheel bearing unit (1) both parts (2', 2") of the hub element (2) are moved axially (a) toward each other into a final relative position so that at least one bearing ring (4', 4", 5) is axially fixed relatively to the hub element (2) and
wherein both parts (2', 2") of the hub element (2) are permanently connected by a welding process (9) in the final relative position,
**characterized in**
**that** the welding process is a laser welding process,
wherein the laser beam (10) is directed in axial direction (a) from an outboard or inboard side (11, 13) of the wheel bearing unit (1) to a face side (12, 14) of the hub element (2) or
wherein the laser beam (10) is directed in radial direction (r) to the radial inner surface (15) of the hub element (2).

2. Method according to claim 1, **characterized in that** the welding process is the final step of the assembly of the wheel bearing unit (1).

3. Method according to claim 1 or 2, **characterized in that** the two parts (2', 2") of the hub element (2) are pressed towards each other (F₁, F₂) in axial direction (a) during the welding process, so that a desired amount of preload is established in the bearing arrangement (6).

4. Wheel bearing unit (1) for a vehicle wheel, comprising a hub element (2) having a first part (2') with a radially (r) extending flange section for fixing the vehicle wheel and/or a brake disk at a face side (3) of the flange section (2') and having a second part (2") with an axially (a) extending sleeve section for supporting at least one inner ring (4', 4") or at least one outer ring (5) of a bearing arrangement (6) for supporting the hub element (2), wherein each of the two parts (2', 2") of the hub element (2) has an axial stop (7, 8) for one of the inner or outer rings (4', 4", 5), wherein at least one bearing ring (4', 4", 5) is axially fixed relatively to the hub element (2) between the two axial stops (7, 8), wherein both parts (2', 2") of the hub element (2) are permanently connected by a welding seam (9) and wherein a defined preload is established in the bearing arrangement (6) by the relative position of the two parts (2', 2") of the hub element (2),
**characterized in**
**that** the welding seam (9) is arranged at a face side (12, 14) of the hub element (2) or at a radial inner surface (15) of the hub element (2).

5. Wheel bearing unit according to claim 4, **characterized in that** the two parts (2', 2") of the hub element (2) overlap by a defined amount (x) in axial direction (a).

6. Wheel bearing unit according to claim 4 or 5, **characterized in that** the hub element (2) or at least one part (2', 2") of the hub element (2) consists of sheet metal, wherein the sheet metal is especially a ferrous metal, a non-ferrous metal, or a combination of a ferrous and a non-ferrous metal.

7. Wheel bearing unit according to at least one of claims 4 till 6, **characterized in that** the face side (3) of the flange section (2') has axially prominent ribs (16) for contacting the vehicle wheel rim and/or the brake disk.

8. Wheel bearing unit according to at least one of claims 4 till 7, **characterized in that** the flange section (2') has at least one spigot element (17) extending in axial direction (a) to the outboard side (11) for centering of the vehicle wheel rim and/or the brake disk.

9. Wheel bearing unit according to at least one of claims 4 till 8, **characterized in that** the hub element (2) or at least a part (2") of the hub element (2) is equipped with a form-fit connection (18) for transferring a torque from a shaft (19) to the wheel (20).

10. Wheel bearing unit according to at least one of claims 4 till 9, **characterized in that** the at least one inner ring (4', 4") of the bearing arrangement (6) can rotate relatively to the at least one outer ring (5), wherein the at least one outer ring (5) is arranged stationary.

11. Wheel bearing unit according to at least one of claims 4 till 10, **characterized in that** the bearing arrangement (6) is a double-row angular contact bearing.

## Patentansprüche

1. Verfahren zur Herstellung einer Radlagereinheit (1) für ein Fahrzeugrad, wobei die Radlagereinheit (1) ein Nabenelement (2) umfasst, das ein erstes Teil (2') mit einem sich radial (r) erstreckenden Flanschbereich zur Befestigung des Fahrzeugrades und/oder einer Bremsscheibe an einer Stirnseite (3) des Flanschbereichs (2') aufweist sowie ein zweites Teil (2") mit einem sich axial (a) erstreckenden Hülsenbereich zur Aufnahme mindestens eines Innenrings (4', 4") oder mindestens eines Außenrings (5) einer Lageranordnung (6) zur Lagerung des Nabenelements (2),
wobei die beiden Teile (2', 2") des Nabenelements (2) so geformt sind, dass jedes der Teile (2', 2") einen axialen Anschlag (7, 8) für einen der Innen- oder Außenringe (4', 4", 5) hat,
wobei während der Montage der Radlagereinheit (1) beide Teile (2`, 2") des Nabenelements (2) axial (a) in eine relative Endposition aufeinander zu bewegt werden, so dass mindestens ein Lagerring (4', 4", 5) relativ zum Nebenelement (2) axial fixiert ist und
wobei beide Teile (2', 2") des Nabenelements (2) dauerhaft durch einen Schweißprozess (9) in der relativen Endposition verbunden sind,
**dadurch gekennzeichnet,**
**dass** der Schweißprozess ein Laser-Schweißprozess ist,
wobei der Laserstrahl (10) in axiale Richtung (a) von einer Außenseite oder Innenseite (11, 13) der Radlagereinheit (1) zu einer Stirnseite (12, 14) des Nabenelements (2) gerichtet ist oder
wobei der Laserstrahl (10) in radiale Richtung (r) auf die radiale Innenoberfläche (15) des Nabenelements (2) gerichtet ist.

2. Verfahren nach Anspruch 1, **dadurch gekennzeichnet, dass** der Schweißprozess den letzten Schritt der Montage der Radlagereinheit (1) darstellt.

3. Verfahren nach Anspruch 1 oder 2, **dadurch gekennzeichnet, dass** die beiden Teile (2', 2") des Nabenelements (2) in axialer Richtung während des Schweißprozesses aufeinander zu gedrückt werden (F₁, F₂), so dass eine gewünschte Vorspannung in der Lageranordnung (6) hervorgerufen wird.

4. Radlagereinheit (1) für ein Fahrzeugrad, umfassend ein Nabenelement (2), das ein erstes Teil (2') mit einem sich radial (r) erstreckenden Flanschbereich zur Befestigung des Fahrzeugrades und/oder einer Bremsscheibe an einer Stirnseite (3) des Flanschbereichs (2') aufweist sowie ein zweites Teil (2") mit einem sich axial (a) erstreckenden Hülsenbereich zur Aufnahme mindestens eines Innenrings (4', 4") oder mindestens eines Außenrings (5) einer Lageranordnung (6) zur Lagerung des Nabenelements (2), wobei jeder der beiden Teile (2', 2") des Nabenelements (2) einen axialen Anschlag (7, 8) für einen der Innen- oder Außenringe (4', 4", 5) hat, wobei mindestens ein Lagerring (4', 4", 5) relativ zum Nabenelement (2) zwischen den beiden axialen Anschlägen (7, 8) axial festgelegt ist, wobei beide Teile (2', 2") des Nabenelements (2) dauerhaft mittels einer Schweißnaht (9) verbunden sind und wobei eine definierte Vorspannung in der Lageranordnung (6) durch die relative Position der beiden Teile (2', 2") des Nabenelements (2) vorliegt,
**dadurch gekennzeichnet,**
**dass** die Schweißnaht (9) an einer Stirnseite (12, 14) des Nabenelements (2) oder an einer radialen Innenoberfläche (15) des Nabenelements (2) angeordnet ist.

5. Radlagereinheit nach Anspruch 4, **dadurch gekennzeichnet, dass** die beiden Teile (2', 2") des Nabenelements (2) um einen definierten Betrag (x) in axiale Richtung (a) überlappen.

6. Radlagereinheit nach Anspruch 4 oder 5, **dadurch gekennzeichnet, dass** das Nabenelements (2) oder zumindest ein Teil (2', 2") des Nabenelements (2) aus Blech besteht, wobei das Blech vorzugsweise ein Eisenmaterial, ein Nichteisenmaterial oder eine Kombination eines Eisenmaterials mit einem Nichteisenmaterial ist.

7. Radlagereinheit nach mindestens einem der Ansprüche 4 bis 6, **dadurch gekennzeichnet, dass** die Stirnseite (3) des Flanschbereichs (2') axial hervorstehende Rippen (16) zur Kontaktierung der Fahrzeugradfelge und/oder der Bremsscheibe aufweist.

8. Radlagereinheit nach mindestens einem der Ansprüche 4 bis 7, **dadurch gekennzeichnet, dass** der Flanschbereich (2') mindestens ein in Richtung der Außenseite (11) in axiale Richtung (a) erstreckendes Zentrierzapfenelement (17) für die Zentrierung der Fahrzeugradfelge und/oder der Bremsscheibe aufweist.

9. Radlagereinheit nach mindestens einem der Ansprüche 4 bis 8, **dadurch gekennzeichnet, dass** das Nabenelement (2) oder mindestens ein Teil (2") des Nabenelement (2) mit einer formschlüssigen Antriebsverbindung (18) für die Übertragung eines Drehmoments von einer Welle (19) auf das Rad (20) ausgestattet ist.

10. Radlagereinheit nach mindestens einem der Ansprüche 4 bis 9, **dadurch gekennzeichnet, dass** der mindestens eine Innenring (4', 4") der Lageranordnung (6) relativ zum mindestens einen Außenring (5) rotieren kann, wobei der mindestens eine Außenring (5) stationär angeordnet ist.

11. Radlagereinheit nach mindestens einem der Ansprüche 4 bis 10, **dadurch gekennzeichnet, dass** die Lageranordnung (6) ein zweireihiges Schrägkugellager ist.

## Revendications

1. Procédé de production d'une unité de roulement de roue (1) pour une roue de véhicule, dans lequel l'unité de roulement de roue (1) comprend un élément de moyeu (2) ayant une première partie (2') avec une section de flasque s'étendant dans le plan radial (r) pour fixer la roue de véhicule et/ou un disque de frein au niveau d'un côté latéral (3) de la section de flasque (2') et ayant une seconde partie (2") avec une section de manchon s'étendant dans le plan axial (a) pour soutenir au moins une bague intérieure (4', 4") ou au moins une bague extérieure (5) d'un agencement de roulement (6) en vue de soutenir l'élément de moyeu (2) ;
dans lequel les deux parties (2', 2") de l'élément de moyeu (2) sont formées de sorte que chacune des parties (2', 2") comporte une butée axiale (7, 8) prévue pour une bague parmi les bagues intérieures et extérieures (4'_{,} 4", 5) ;
dans lequel pendant le montage de l'unité de roulement de roue (1), les deux parties (2', 2") de l'élément de moyeu (2) sont déplacées l'une vers l'autre dans le plan axial (a) pour prendre une position relative finale, de sorte qu'au moins une bague de roulement (4', 4", 5) est fixe dans le plan axial par rapport à l'élément de moyeu (2) ; et
dans lequel les deux parties (2', 2") de l'élément de moyeu (2) sont reliées en permanence dans la position relative finale par le biais d'un procédé de soudage (9) ;
**caractérisé en ce que** :
le procédé de soudage est un procédé de soudage par laser ;
dans lequel le faisceau laser (10) est dirigé dans la direction axiale (a) en partant d'un côté extérieur ou
intérieur (11, 13) de l'unité de roulement de roue (1) vers un côté latéral (12, 14) de l'élément de moyeu (2) ; ou
dans lequel le faisceau laser (10) est dirigé dans la direction radiale (r) en direction de la surface intérieure radiale (15) de l'élément de moyeu (2).

2. Procédé selon la revendication 1, **caractérisé en ce que** le procédé de soudage est l'étape de montage finale de l'unité de roulement de roue (1).

3. Procédé selon la revendication 1 ou 2, **caractérisé en ce que** les deux parties (2', 2") de l'élément de moyeu (2) sont comprimées en direction l'une de l'autre (F₁, F₂) dans la direction axiale (a) pendant le procédé de soudage, de façon à établir une quantité de précharge souhaitée dans l'agencement de roulement (6).

4. Unité de roulement de roue (1) pour une roue de véhicule, comprenant un élément de moyeu (2) ayant une première partie (2') dotée d'une section de flasque s'étendant dans le plan radial (r) servant à fixer la roue de véhicule et/ou un disque de frein au niveau d'un côté latéral (3) de la section de flasque (2') et une seconde partie (2") dotée d'une section de manchon s'étendant dans le plan axial (a) servant à maintenir au moins une bague intérieure (4', 4") ou au moins une bague extérieure (5) d'un agencement de roulement (6) pour soutenir l'élément de moyeu (2), dans laquelle chacune des deux parties (2', 2") de l'élément de moyeu (2) comporte une butée axiale (7, 8) conçue pour une bague parmi les bagues intérieure et extérieure (4', 4", 5), dans laquelle au moins une bague de roulement (4', 4", 5) est fixe dans le plan axial par rapport à l'élément de moyeu (2) prévu entre les deux butées axiales (7, 8), dans laquelle les deux parties (2', 2") de l'élément de moyeu (2) sont reliées en permanence par un cordon de soudure (9) et dans laquelle une précharge définie est établie dans l'agencement de roulement (6) par la position relative des deux parties (2', 2") de l'élément de moyeu (2), **caractérisée en ce que** le cordon de soudure (9) est agencé au niveau d'un côté latéral (12, 14) de l'élément de moyeu (2) ou au niveau d'une surface intérieure radiale (15) de l'élément de moyeu (2).

5. Unité de roulement de roue selon la revendication 4, **caractérisée en ce que** les deux parties (2', 2") de l'élément de moyeu (2) se chevauchent d'une quantité (x) définie dans la direction axiale (a).

6. Unité de roulement de roue selon la revendication 4 ou 5, **caractérisée en ce que** l'élément de moyeu (2) ou au moins une partie (2', 2") de l'élément de moyeu (2) se compose d'une feuille métallique, dans laquelle la feuille métallique est en particulier fabriquée à partir d'un métal ferreux, d'un métal non-ferreux ou d'une combinaison de métal ferreux et non-ferreux.

7. Unité de roulement de roue selon au moins l'une quelconque des revendications 4 à 6, **caractérisée en ce que** le côté latéral (3) de la section de flasque (2') comporte des nervures saillantes (16) dans le plan axial permettant d'entrer en contact avec la jante de roue et/ou le disque de frein du véhicule.

8. Unité de roulement de roue selon au moins l'une quelconque des revendications 4 à 7, **caractérisée en ce que** la section de flasque (2') comporte au moins un élément mâle (17) s'étendant dans la direction axiale (a) en direction du côté extérieur (11) pour centrer la jante de roue et/ou le disque de frein du véhicule.

9. Unité de roulement de roue selon au moins l'une quelconque des revendications 4 à 8, **caractérisée en ce que** l'élément de moyeu (2) ou au moins une partie (2") de l'élément de moyeu (2) est équipé d'une connexion par complémentarité de formes (18) permettant de transmettre un couple d'un arbre (19) à la roue (20).

10. Unité de roulement de roue selon au moins l'une quelconque des revendications 4 à 9, **caractérisée en ce que** l'au moins une bague intérieure (4', 4") de l'agencement de roulement (6) peut pivoter par rapport à l'au moins une bague extérieure (5), dans laquelle l'au moins une bague extérieure (5) est agencée de façon à être stationnaire.

11. Unité de roulement de roue selon au moins l'une quelconque des revendications 4 à 10, **caractérisée en ce que** l'agencement de roulement (6) est un roulement à contact angulaire à double rangée.
